# EUROPEAN PATENT APPLICATION

(11) **EP 4 717 492 A1**
(43) Date of publication of application: **01.04.2026**
(21) Application number: 24215384.9
(22) Date of filing: 26.11.2024
(51) Int. Cl.: B60K 28/06, B60W 40/08, B60W 50/12

(54) **VEHICLE CONTROLLING SYSTEM AND METHOD THEREOF**

(30) Priority: 27.09.2024 IN 202411073028
(71) Applicant: Novus Hi-Tech Robotic Systemz Private Ltd., 122001 Gurgaon , Haryana (IN)
(72) Inventor: Mehta, Sharad, 122001 Haryana (IN); Kaushik, Aman, 122001 Haryana (IN); Agrahari, Ayushman, 122001 Haryana (IN); Singh, Lovepreet, 122001 Haryana (IN); Yadav, Ravi, 122001 Haryana (IN); Kapuria, Anuj, 122001 Haryana- (IN)
(74) Representative: Hafner & Kohl PartmbB

(57) **Abstract**

The present disclosure provides a vehicle controlling system and method thereof. The system 100 and method 300 include a driver identification unit 101, an alcohol detection unit 102, a control unit 104, and a driver monitoring unit (DMU) 106 to perform many tasks. The alcohol detection unit 102 receives and measures an alcohol content in an authorized driver's sample. The DMU 106 monitors a driving pattern of the authorized driver over a predefined span. Further, the control unit 104 is operably configured to allow a vehicle to start if the measured alcohol content is within a predefined limit, assess the driver's monitored driving pattern post-starting of the vehicle and limit at least one vehicle operation based on the assessed driving pattern and measured alcohol content.

## Description

### TECHNICAL FIELD

The present application relates to the technical field of vehicles, and more specifically relates to a vehicle controlling system and method thereof.

### BACKGROUND

Drunk driving poses a critical public safety concern globally, leading to a considerable number of traffic accidents, injuries, and fatalities each year. Several technologies have been developed to tackle this issue, with prevalent solutions including ignition interlock devices and alcohol detection systems.

Many prior art solutions utilize a breathalyzer where the driver blows into the device to provide a breath sample. If the detected blood alcohol concentration (BAC) surpasses a predefined limit, the device prevents the vehicle from starting. Although effective upon activation, these devices do not mitigate the risk of initial vehicle operation by an impaired driver.

Some prior art utilizes different types of sensors to detect the alcohol in the air within the vehicle cabin or directly from the driver's breath. These systems may alert the driver or notify authorities upon detecting alcohol, but generally, they do not prevent the initial operation of the vehicle.

C.N. Patent application 116135651 A discloses a method and device for monitoring drunk driving of driver. In this invention, different alcohol detection modes are adopted according to the type of the functional area to which the parking position belongs to determine whether the driver drinks, so that the detection times of the driver can be reduced, the possibility of false detection is reduced, and the driving experience of a user is improved.

W.O. Patent application 2022062658 A1, discloses an alcohol detection-based intelligent driving control method and apparatus. This method acquiring image sensing data of a driving region and alcohol sensing data in a cabin and detecting, on the basis of the image sensing data and the alcohol sensing data, whether a driver is driving under the influence; and according to a detection result of whether the driver is driving under the influence, lastly performing intelligent driving control on a vehicle driven by the driver.

The above-cited prior art is designed to detect the alcohol content using the different alcohol sensors in the driver's cabin. Further, the DSM (Driver Status Monitoring unit) is used to monitor the driver's activities in the car or cabin. Additionally, in some prior art, there is a description of the driving mode that may control the speed, accelerator, braking, and steering according to the driving sensor data collected by the vehicle's sensors to adapt the vehicle to changing traffic conditions.

None of the aforementioned patents specify monitoring the driver's driving pattern over a predefined period to influence vehicle operation in any way.

The present invention addresses the aforementioned issues and aims to provide a vehicle control system and method that restricts at least one vehicle operation based on evaluated driving patterns and measured alcohol content, thereby preventing road accidents by drunk driving.

### OBJECTIVES OF THE DISCLOSURE

A primary objective of the present disclosure is to provide a vehicle-controlling system and method for mitigating risks associated with impaired driving by integrating real-time alcohol detection with ongoing driver behavior assessment, thereby enhancing road safety.

Another objective of the present disclosure is to provide the system that facilitates a vehicle start only when the alcohol content in the driver's sample is within a predefined limit, thereby minimizing the risk of impaired driving from the outset.

Another objective of this invention is to provide the system that continuously monitors the driver's driving pattern over a predefined span post-start of the vehicle to assess for any deviations or irregularities that may indicate impaired driving behavior.

Another objective of this invention is to provide the system that utilizes an assessed driving pattern and measured alcohol content to proactively restrict at least one vehicle operation if impairment is detected, thereby preventing potential accidents and promoting road safety.

Yet another objective of this invention is to provide the system that ensures compliance with regulatory safety standards and contributes to reducing the societal impact of drunk driving by offering a reliable and efficient solution for vehicle safety.

### SUMMARY OF THE DISCLOSURE

The following is a summary description of illustrative embodiments of the invention. It is provided as a preface to assist those skilled in the art to more rapidly assimilate the detailed design discussion which ensues and is not intended in any way to limit the scope of the claims which are appended hereto in order to particularly point out the invention.

An embodiment of the present invention relates to a vehicle controlling system and method thereof. The system includes a driver identification unit, an alcohol detection unit, a driver monitoring unit, and a control unit to perform many tasks.

In accordance with an embodiment of the present invention, the driver identification unit is configured to identify an authorized driver. Further, the alcohol detection unit is configured to receive a sample from the authorized driver and measure an alcohol content in the of the authorized driver.

In accordance with an embodiment of the present invention, the driver monitoring unit (DMU) is configured to monitor a driving pattern of the authorized driver over a predefined span. Further, the predefined span is any one or a combination of a predefined distance and a predefined time duration.

In accordance with an embodiment of the present invention, the DMU unit includes a plurality of sensors and cameras to continuously monitor the driving pattern of the driver. The driving pattern of the authorized driver includes an eye movement, a head movement, a steering controlling pattern, a voice pattern, a lane changing pattern, a braking pattern, an acceleration and a deceleration pattern, and others.

In accordance with an embodiment of the present invention, the control unit is configured to allow the authorized driver to start a vehicle when the alcohol content in the sample is within a predefined limit of the alcohol content, assess the monitored driving pattern of the authorized driver for the predefined span after the starting of the vehicle, and limit at least one vehicle operation based on the assessed driving pattern and the measured alcohol content in the sample of the authorized driver.

In accordance with an embodiment of the present invention, the control unit is anyone or a combination of a vehicle control unit (VCU), a vehicle management unit (VMU), a motor control unit (MCU), and an engine control unit (ECU). Further, the at least one vehicle operation is any one of a vehicle speed, a steering control, a brake control, a plurality of illumination source control, an acceleration control, a deceleration control, and others.

In accordance with an embodiment of the present invention, a vehicle ignition needs to be on before measurement of the alcohol content in the sample of the authorized driver via the alcohol detection unit.

In accordance with an embodiment of the present invention, the system is further configured to periodically check the alcohol content in the sample of the authorized driver whenever an unsafe driving pattern is detected during a trip, ensuring continuous compliance with the predefined alcohol content limit.

In accordance with another embodiment of the present invention, the method includes a driver identification unit, an alcohol detection unit, a driver monitoring unit, and a control unit to perform many steps.

In accordance with an embodiment of the present invention, in the first step, the driver identification unit identify an authorized driver and in the second step, the alcohol detection unit is configured to receive a sample from a driver and measure an alcohol content in the breath of the driver.

In accordance with an embodiment of the present invention, in the third step, the control unit allows the driver to start a vehicle when the alcohol content in the breath sample is within a predefined limit of the alcohol content.

In accordance with an embodiment of the present invention, in the fourth step, the driver monitoring unit (DMU) is configured to monitor a driving pattern of the driver over a predefined span after starting the vehicle. Further, the predefined span is any one or a combination of a predefined distance and a predefined time duration.

In accordance with an embodiment of the present invention, the DMU unit includes a plurality of sensors and cameras to continuously monitor the driving pattern of the driver. The driving pattern of the driver includes an eye movement, a head movement, a steering controlling pattern, a voice pattern, a lane changing pattern, a braking pattern, an acceleration and a deceleration pattern, and others.

In accordance with an embodiment of the present invention, in the fifth step, the control unit further assesses the monitored driving pattern of the driver.

In accordance with an embodiment of the present invention, in the sixth step, the control unit limits at least one vehicle operation based on the assessed driving pattern and the measured alcohol content in the breath sample of the driver.

In accordance with an embodiment of the present invention, the control unit is anyone or a combination of a vehicle control unit (VCU), a vehicle management unit (VMU), a motor control unit (MCU), and an engine control unit (ECU). Further, the at least one vehicle operation is any one of a vehicle speed, a steering control, a brake control, a plurality of illumination source control, an acceleration control, a deceleration control, and others.

In accordance with an embodiment of the present invention, a vehicle ignition needs to be on before measurement of the alcohol content in the breath sample of the driver via the alcohol detection unit.

In accordance with an embodiment of the present invention, the method is further configured to periodically check the driver's breath alcohol content whenever an unsafe driving pattern is detected during a trip, ensuring continuous compliance with the predefined alcohol content limit.

These and other aspects herein will be better appreciated and understood when considered in conjunction with the following description and the accompanying drawing.

It should be understood, however, that the following descriptions are given by way of illustration and not of limitation. Many changes and modifications may be made within the scope of the invention herein without departing from the spirit thereof. The foregoing objectives are attained by employing the vehicle controlling system and the method there of for limiting the at least one vehicle operation while driving the vehicle by the driver based on the assessed driving pattern and measured alcohol content in the breath sample of the driver.

### BRIEF DESCRIPTION OF DRAWINGS

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.
FIG. 1 illustrates a vehicle controlling system 100, according to an embodiment of a present invention;
Fig. 2 is a flowchart 200 illustrating a method for automatically limiting at least one vehicle operation, according to an exemplary embodiment of the present invention;
Fig. 3 is a flow chart illustrating a method 300 for controlling vehicle operation, according to another exemplary embodiment of the present invention; and
Fig. 4 is a schematic diagram showing a number of functional modules of a processor according to an embodiment;

It should be noted that the accompanying figure is intended to present illustrations of a few examples of the present disclosure. The figure is not intended to limit the scope of the present disclosure. It should also be noted that the accompanying figure is not necessarily drawn to scale.

### DETAILED DESCRIPTION

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features.

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only". Throughout this specification, unless the context requires otherwise the word "comprise", and variations such as "comprises" and "comprising", will be understood to imply the inclusion of a stated element or step or group of elements or steps but not the exclusion of any other element or step or group of elements or steps.

The term "including" is used to mean "including but not limited to". "Including" and "including but not limited to" are used interchangeably. The accompanying drawing is used to help easily understand various technical features and it should be understood that the alternatives presented herein are not limited by the accompanying drawing. As such, the present disclosure should be construed to extend to any alterations, equivalents and substitutes in addition to those which are particularly set out in the accompanying drawing. Although the terms first, second, etc. may be used herein to describe various elements, these elements should not be limited by these terms. These terms are generally only used to distinguish one element from another.

Conditional language used herein, such as, among others, "can," "may," "might," "e.g.," and the like, unless specifically stated otherwise, or otherwise understood within the context as used, is generally intended to convey that certain alternatives include, while other alternatives do not include, certain features, elements and/or steps. Thus, such conditional language is not generally intended to imply that features, elements and/or steps are in any way required for one or more alternatives or that one or more alternatives necessarily include logic for deciding, with or without other input or prompting, whether these features, elements and/or steps are included or are to be performed in any particular alternative. The terms "comprising," "including," "having," and the like are synonymous and are used inclusively, in an open-ended fashion, and do not exclude additional elements, features, acts, operations, and so forth. Also, the term "or" is used in its inclusive sense (and not in its exclusive sense) so that when used, for example, to connect a list of elements, the term "or" means one, some, or all of the elements in the list.

Disjunctive language such as the phrase "at least one of X, Y, Z," unless specifically stated otherwise, is otherwise understood with the context as used in general to present that an item, term, etc., may be either X, Y, or Z, or any combination thereof (e.g., X, Y, and/or Z). Thus, such disjunctive language is not generally intended to, and should not, imply that certain alternatives require at least one of X, at least one of Y, or at least one of Z to each be present.

Terms control unit and CU may be used interchangeably for convenience.

Terms controller area network and CAN may be used interchangeably for convenience.

Terms Driver monitoring unit and DMU may be used interchangeably for convenience.

Terms driver and authorized driver may be used interchangeably for convenience.

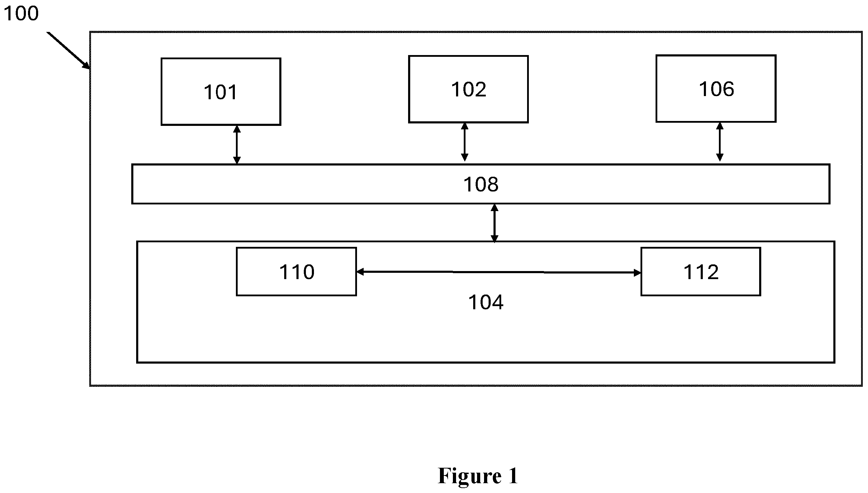

FIG. 1 illustrates a vehicle controlling system 100, according to an embodiment of a present invention. The system includes a driver identification unit 101, an alcohol detection unit 102, a driver monitoring unit 106, and a control unit 104 to perform many tasks.

In accordance with an embodiment of the present invention, the driver identification unit 101 is configured to identify an authorized driver. The driver identification unit 101 uses various technologies to confirm that the driver is authorized to operate the vehicle and may include such as, biometric sensors; key fobs or cards; PIN or password entry; driver profiles etc.

In an advantage, the driver's presence may be determined using techniques like motion detection, occupancy sensing, thermal vision etc. The driver identification unit 101 extracts identification features of the driver, once it is ascertained that the driver is present within the vehicle. Identification features extracted may include, but not limited to facial scan, retinal scan, thermal signatures, fingerprint scan etc. In another example, the driver's/user's picture may be taken by the driver identification unit 101. The identification features extracted may be then compared with a database of drivers stored within the storage unit. On a successful match, the driver identity is then shared with the control unit 104 for further processing.

In accordance with an embodiment of the present invention, the alcohol detection unit 102 is configured to receive a sample from a driver and measure an alcohol content in the sample of the authorized driver. In addition, the sample of the authorized driver is any one or a combination of a breath sample, a blood sample, a saliva sample, a voice sample and eye-related samples.

In accordance with another embodiment of the present invention, the alcohol detection unit 102 is designed to measure the alcohol content in a driver's sample. It operates by analyzing the amount of alcohol content present, which may correlate with the blood alcohol concentration. The alcohol detection unit 102 utilizes advanced technology such as infrared spectroscopy or electrochemical sensors to provide precise readings. The calibration procedures ensure the reliability and accuracy of the alcohol detection unit 102 before each use, thereby optimizing its performance in detecting alcohol contents. In addition, the alcohol detection unit 102 may be of any type such as; Breathalyzers; Chemical Test Strips, Continuous Alcohol Monitoring devices, Blood Alcohol Content (BAC) Sensors, Electronic Nose (E-Nose) etc.

In accordance with an embodiment of the present invention, the driver monitoring unit (DMU) 106 is configured to monitor a driving pattern of the authorized driver over a predefined span. Further, the predefined span is any one or a combination of a predefined distance and a predefined time duration.

In accordance with an embodiment of the present invention, the DMU 106 includes a plurality of sensors and cameras to continuously monitor the driving pattern of the authorized driver. The driving pattern of the driver includes an eye movement, a head movement, a steering controlling pattern, a voice pattern, a lane changing pattern, a braking pattern, an acceleration and a deceleration pattern, and others.

In one embodiment, the DMU's 106 sensors continuously monitor and record the driver's behavior and vehicle dynamics over the predefined in real-time to detect any deviations from normal driving patterns that may suggest impairment.

In accordance with an embodiment of the present invention, the control unit 104 is configured to allow the authorized driver to start a vehicle when the alcohol content in the sample is within a predefined limit of the alcohol content, assess the monitored driving pattern of the authorized driver for the predefined span after the starting of the vehicle, and limit at least one vehicle operation based on the assessed driving pattern and the measured alcohol content in the sample of the authorized driver.

In accordance with an embodiment of the present invention, the at least one vehicle operation is any one of a vehicle speed, a steering control, a brake control, a plurality of illumination source control, an acceleration control, a deceleration control, and others.

In accordance with an embodiment of the present invention, a vehicle ignition needs to be on before measurement of the alcohol content in the sample of the driver via the alcohol detection unit 102.

In accordance with an embodiment of the present invention, the system 100 is further configured to periodically check the driver's alcohol content whenever an unsafe driving pattern is detected during a trip, ensuring continuous compliance with the predefined alcohol content limit.

In accordance with another embodiment of the present invention, the control unit 104 is anyone or a combination of a vehicle control unit (VCU), a vehicle management unit (VMU), a motor control unit (MCU), and an engine control unit (ECU).

Furthermore, the term related to the control unit 104 such as "controller", "control apparatus", "control device", "control module", or "server", etc refers to a hardware device including a memory 112 and a processor 110 configured to execute one or more steps interpreted as an algorithm structure. The memory 112 stores algorithm steps and the processor 110 executes the algorithm steps to perform one or more processes of the system 100 and method 300 in accordance with various exemplary embodiments of the present disclosure.

The control unit 104 according to exemplary embodiments of the present disclosure may be implemented through a nonvolatile memory configured to store algorithms for controlling the operation of various components of the vehicle or data about software commands for executing the algorithms, and the processor 110 configured to perform operation to be described above using the data stored in the memory 112. The memory 112 and the processor 110 may be individual chips.

Alternatively, the memory 112 and the processor 110 may be integrated in a single chip. The processor 110 may be implemented as one or more processors. The processor 110 may include various logic circuits and operation circuits, may process data according to a program provided from the memory 112, and may generate a control signal according to the processing result.

The control unit 104 may be at least one microprocessor operated by a predetermined program which may include a series of commands for carrying out the system 100 and method 300 included in the aforementioned various exemplary embodiments of the present disclosure.

The aforementioned invention may also be embodied as computer-readable code on a computer-readable recording medium. The computer-readable recording medium is any data storage device that can store data which may be thereafter read by a computer system and store and execute program instructions which may be thereafter read by a computer system.

Examples of the computer-readable recording medium include Hard Disk Drive (HDD), solid state disk (SSD), silicon disk drive (SDD), read-only memory (ROM), random-access memory (RAM), flash memory, CD-ROMs, magnetic tapes, floppy discs, optical data storage devices, etc and implementation as carrier waves (e.g., transmission over the Internet). Examples of the program instruction include machine language code such as those generated by a compiler, as well as high-level language code which may be executed by a computer using an interpreter or the like.

In various exemplary embodiments of the present disclosure, each operation described above may be performed by the control unit 104, and the control unit 104 may be configured by a plurality of control unit, or an integrated single control unit.

In various exemplary embodiments of the present disclosure, the control unit 104 may be implemented in a form of hardware or software, or may be implemented in a combination of hardware and software.

In various exemplary embodiments of the present disclosure, each control unit 104 includes one or more controllers, actuators, sensors, and/or other components that control the operation, handling, and other characteristics of the vehicle.

In various exemplary embodiments of the present disclosure, the control unit 104 may also include one or more input/output ("I/O") ports (e.g., serial ports, (e.g., RS233 port, USB, etc.) (not shown) and one or more network interfaces. The I/O port or ports may be operable to communicate with input/output devices, such as an internal and/or external display, keypad, mouse, pointing device, control panel, touch screen display, another computer-based device, printer, remote control, microphone, speaker, etc., which facilitates user interaction with the control unit 104.

Furthermore, the terms such as "unit", "module", etc. included in the specification mean units for processing at least one function or operation, which may be implemented by hardware, software, or a combination thereof.

In one embodiment, the control unit 104 interfaces with the controller area networks (CAN) 108, for transmission of command and control signals from the control unit 104 various electronics and electrical systems within the vehicle. Through its comprehensive control capabilities, the CU 104 optimizes the vehicle's overall efficiency, safety, and adaptability across diverse operating scenarios and driving conditions.

In accordance with another exemplary alternative embodiment of the present invention, the vehicle is generally equipped with the loT which may or may not be integrated with the Control Unit (CU) 104.

In another alternative embodiment, the loT is internally connected with a GPS (Global Positioning System) and network modules, allowing it to send notifications to a user device of either the authorized driver or their relatives to warn them that the driver is overdrunk because their alcohol content is above than the predefined limit of the alcohol content.

In accordance with an exemplary embodiment of the present invention, the user device is any one or a combination of a desktop computer, a laptop computer, a user computer, a tablet computer, a personal digital assistant (PDA), a cellular telephone, a communication unit appliance, a camera, a smartphone, an enhanced general packet radio service (EGPRS) mobile phone, a media player, a navigation device, an email device.

Furthermore, the user device may be provided access to and/or receive application software executed and/or stored on any of the remote server.

In some examples, the user device performs functions of a social communication unit (not shown) to the cloud server. In some implementations, the user device may communicate wirelessly through the communication unit that is the part of the controller area network (CAN) 108, which may include digital signal processing circuitry where necessary.

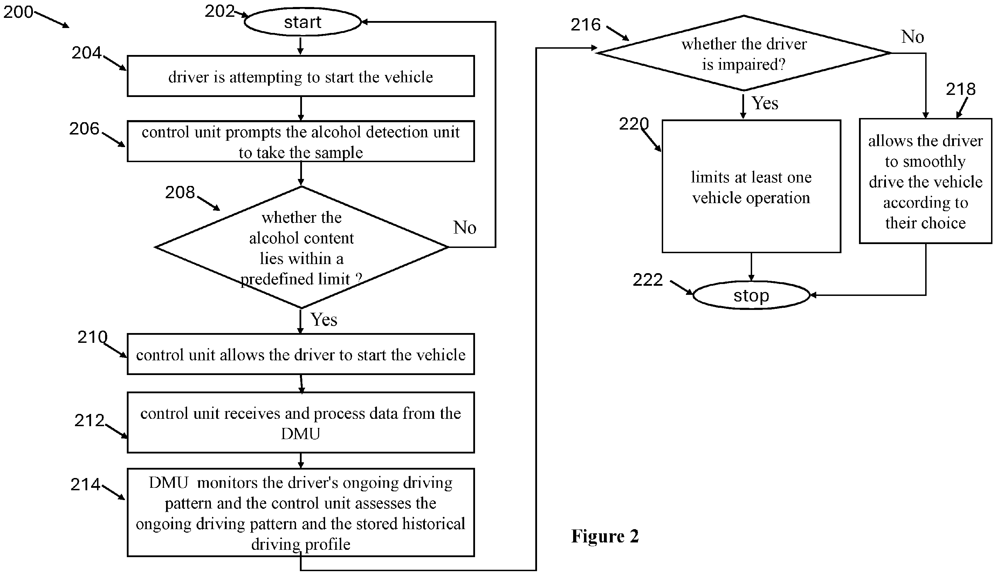

Fig. 2 is a flowchart 200 illustrating a method for automatically limiting the at least one vehicle operation, according to an exemplary embodiment of the present invention. The flowchart 200 starts at step 202, and proceeds to step 204, 206, 208, 210, 212, 214, 216, 218, 220, and 222.

The method is first operative at step 202.

At step 204, the driver is attempting to start the vehicle.

At step 206, the control unit 104 prompts the breath analyzer 102 to collect the breath sample when the driver attempts to start the vehicle. The control unit 104 starts analyzing the alcohol content in the breath sample against the predefined limit of the alcohol content.

At step 208, a determination is made whether the measured alcohol content is within the predefined limit, as set by safety regulations or user-defined parameters, when the determination is "YES", then the flowchart 200 proceeds to step 210 otherwise the flowchart 200 proceeds to step 202.

At step 210, the control unit 104 allows the driver to start the vehicle.

At step 212, the control unit 104 continuously receives and processes data from the DMU 106.

At step 214, the DMU 106 monitors the driver's ongoing driving behavior and the control unit 104 assesses the ongoing driving pattern. This real-time assessment helps in identifying any changes or irregularities in driving patterns that may indicate impairment.

At step 216, another determination is made whether the driver is impaired, when the determination is "YES", then the flowchart 200 proceeds to step 220 otherwise the flowchart 200 proceeds to step 218. The determination is based on the data from both the breath analyzer 102 and DMU 106. Further, the control unit 104 proactively intervenes if impairment is detected.

At step 218, the control unit 104 allows the driver to smoothly drive the vehicle according to their choice.

At step 220, the control unit 104 limits the at least one vehicle operation. These actions are designed to prevent potential accidents and enhance overall road safety.

At step 220, the method is terminated.

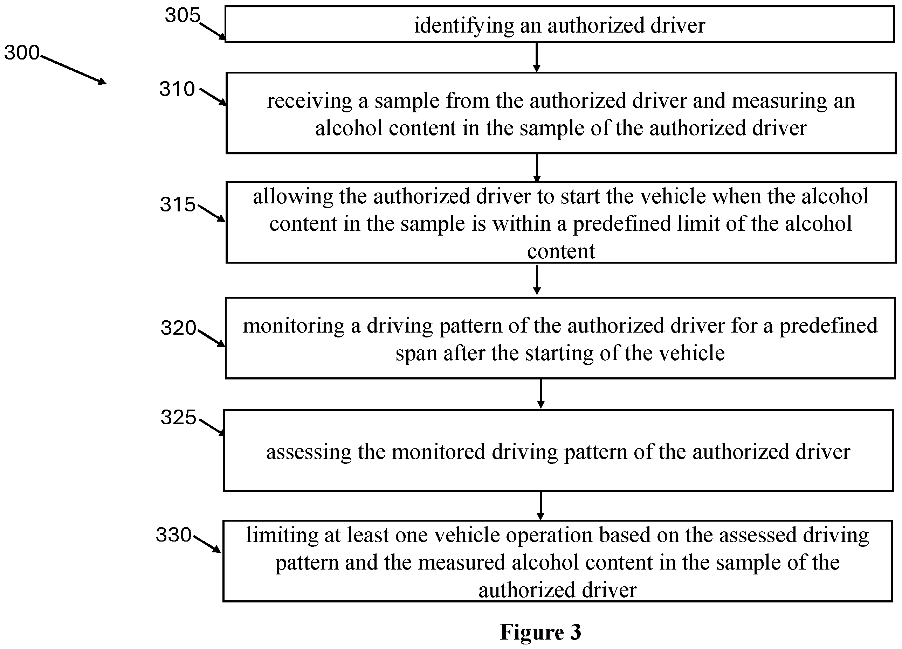

Fig. 3 is a flow chart illustrating a method 300 for controlling vehicle operation, according to an embodiment of the present invention. The method 300 includes a driver identification unit 101, an alcohol detection unit 102, , a driver monitoring unit (DMU) 106, and a control unit 104 to perform multiple steps. The method 300 starts at step 305 and proceeds to steps 310, 315, 320, 325 and 330.

The method 300 is first operative at step 305 in which the driver identification unit 101 configured to identify an authorized driver.

At step 310, the alcohol detection unit 102 is configured to receive a sample from the authorized driver and measure an alcohol content in the sample of the authorized driver.

At step 315, the control unit 104 allows the authorized driver to start a vehicle when the alcohol content in the sample is within a predefined limit of the alcohol content.

At step 320, the driver monitoring unit (DMU) 106 is configured to monitor a driving pattern of the authorized driver over a predefined span after starting the vehicle. Further, the predefined span is any one or a combination of a predefined distance and a predefined time duration.

In accordance with an embodiment of the present invention, the DMU 106 includes a plurality of sensors and cameras to continuously monitor the driving pattern of the driver. The driving pattern of the driver includes an eye movement, a head movement, a steering controlling pattern, a voice pattern, a lane changing pattern, a braking pattern, an acceleration and a deceleration pattern, and others.

At step 325, the control unit 104 further assesses the monitored driving pattern of the authorized driver.

At step 330, the control unit 104 limits at least one vehicle operation based on the assessed driving pattern and the measured alcohol content in the breath sample of the authorized driver.

In accordance with an embodiment of the present invention, the control unit 104 is anyone or a combination of a vehicle control unit (VCU), a vehicle management unit (VMU), a motor control unit (MCU), and an engine control unit (ECU). Further, the at least one vehicle operation is any one of a vehicle speed, a steering control, a brake control, a plurality of illumination source control, an acceleration control, a deceleration control, and others.

In accordance with an embodiment of the present invention, a vehicle ignition needs to be on before measurement of the alcohol content in the breath sample of the driver via the alcohol detection unit 102.

In accordance with an embodiment of the present invention, the method 300 is further configured to periodically check the driver's alcohol content whenever an unsafe driving pattern is detected during a trip, ensuring continuous compliance with the predefined alcohol content limit.

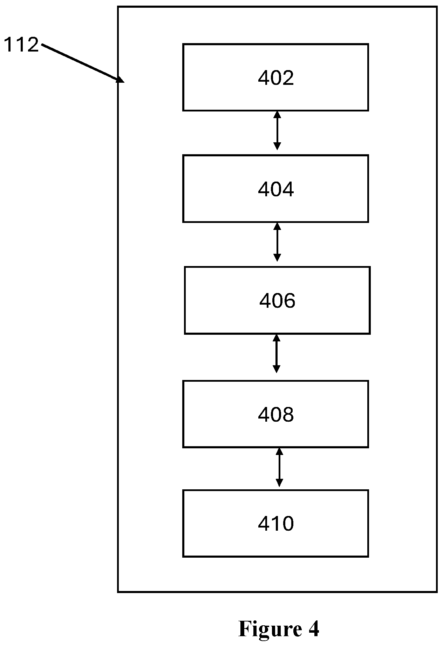

Fig. 4 schematically illustrates, in terms of a number of functional modules, the components of a control unit 104, according to another exemplary embodiment of the present invention. The number of functional modules comprise, a receive module 402, a decision module 404, a monitoring module 406, an impairment detection module 408, and a response module 410.

In general, each functional module 402-410 can be implemented either in hardware or software. Ideally, the control unit 104 includes the processor 110 which has the number of functional modules 402-410, potentially in collaboration with the communications interface (now shown in the figure) and/or the memory 112, can implement one or more functions, as described herein.

In an embodiment, the receive module 402, configured to receive data from alcohol detection unit 102. Further, the decision module 404 allows the driver to start the vehicle upon the successful assessment of the alcohol content in the sample of the authorized driver. In addition, the monitoring module 406 actively monitors the driver's driving pattern and uses the data gathered from onboard sensors. This includes monitoring steering patterns, acceleration and deceleration rates, lane positioning, and adherence to traffic signals. Real-time analysis of this data allows the control unit 104 to detect deviations from normal driving behavior that may indicate impairment. Further, the impairment detection module 408 is configured to correlate the real-time data from the DMU 106 with the initial alcohol content measurement. If the analysis indicates an erratic driving pattern consistent with impairment or if subsequent breath samples reveal an increase in the alcohol content above the predefined limit, the control unit 104 initiates proactive measures. Lastly, the response module 410 implements immediate restrictions on the at least one vehicle operation. The at least one vehicle operation may include reducing vehicle speed, activating emergency signals, or notifying designated authorities for intervention.

In an example, if the driver is observed continuously drinking while operating the vehicle, the DMU monitors the driver's behavior throughout the journey. In such instances, the present system 100 may issue warnings to the driver and take control of at least one vehicle function, such as vehicle speed, steering, brakes, various lights, acceleration, deceleration, among others.

In another advantageous embodiment, the present system 100 combines real-time evaluations of alcohol content and driving behavior to provide prompt and effective intervention in preventing impaired driving incidents, thereby improving road safety. Further, this system 100 enables the vehicle to start only if the alcohol content in the driver's sample is within the predefined limit, thereby reducing the risk of impaired driving from the outset. Moreover, this system 100 ensures adherence to regulatory safety standards and contributes to mitigating the societal impact of drunk driving by offering a dependable and effective vehicle safety solution.

Further, the present system 100 is aligning with the goal of providing a practical solution for vehicle and driver safety by integrating both alcohol content measurement and driving pattern monitoring, proactively prevents potential accidents and ensures compliance with safe driving practices.

In accordance with another advantageous embodiment, the invention is specifically designed to meet rigorous regulatory safety standards that govern vehicle operation and prevent impaired driving. It includes fail-safe mechanisms and redundant systems to ensure dependable performance across various environmental and driving conditions. Routine maintenance and calibration procedures are essential to uphold the system's accuracy and effectiveness consistently.

While the detailed description has shown, described, and pointed out novel features as applied to various alternatives, it can be understood that various omissions, substitutions, and changes in the form and details of the devices or algorithms illustrated can be made without departing from the scope of the disclosure. As can be recognized, certain alternatives described herein can be embodied within a form that does not provide all of the features and benefits set forth herein, as some features can be used or practiced separately from others.

The disclosures and the description herein are intended to be illustrative and are not in any sense limiting the invention, defined in scope by the following claims.

### ELEMENT LIST

| **COMPONENT** | **REFERENCE NUMBER** |
|---|---|
| System | 100 |
| Driver identification unit | 101 |
| Alcohol detection unit | 102 |
| Control unit (CU) | 104 |
| Driver Monitoring Unit (DMU) | 106 |
| Controller Area Network | 108 |
| Processor | 110 |
| Memory | 112 |
| receive module | 402 |
| decision module | 404 |
| monitoring module | 406 |
| impairment detection module | 408 |
| response module | 410 |

## Claims

1. A vehicle controlling system, comprising:
a driver identification unit 101 configured to identify an authorized driver;
an alcohol detection unit 102 configured to receive a sample from the authorized driver and measure an alcohol content in the sample of the authorized driver;
a driver monitoring unit (DMU) 106 configured to monitor a driving pattern of the authorized driver over a predefined span; and
a control unit 104 configured to:
allow the authorized driver to start a vehicle when the alcohol content in the sample is within a predefined limit of the alcohol content;
assess the monitored driving pattern of the authorized driver for the predefined span after the starting of the vehicle; and
limit at least one vehicle operation based on the assessed driving pattern and the measured alcohol content in the sample of the authorized driver.

2. The system 100 as claimed in claim 1, wherein the control unit 104 is anyone or a combination of a vehicle control unit (VCU), a vehicle management unit (VMU), a motor control unit (MCU), and an engine control unit (ECU).

3. The system 100 as claimed in claim 1, wherein the predefined span is any one or a combination a predefined distance and a predefined time duration.

4. The system 100 as claimed in claim 1, wherein the at least one vehicle operation is any one of a vehicle speed, a steering control, a brake control, a plurality of illumination source control, an acceleration control, a deceleration control, and others.

5. The system 100 as claimed in claim 1, wherein a vehicle ignition needs to be on before measurement of the alcohol content in the breath sample of the driver via the alcohol detection unit 102.

6. The system 100 as claimed in claim 1, wherein the DMU 106 includes a plurality of sensors and cameras to continuously monitor the driving pattern of the driver.

7. The system 100 as claimed in claim 1, wherein the driving pattern of the driver includes an eye movement, a head movement, a steering controlling pattern, a voice pattern, a lane changing pattern, a braking pattern, an acceleration and a deceleration pattern, and others.

8. The system 100 as claimed in claim 1, wherein the system 100 further configured to periodically check the driver's breath alcohol content whenever an unsafe driving pattern is detected during a trip, ensuring continuous compliance with the predefined alcohol content limit.

9. A method to control a vehicle, comprising:
identifying, by a driver identification unit 101, an authorized driver;
receiving, by an alcohol detection unit 102, a sample from the authorized driver and measuring an alcohol content in the of the authorized driver;
allowing, by a control unit 104, the authorized driver to start the vehicle when the alcohol content in the sample is within a predefined limit of the alcohol content;
monitoring, by a driver monitoring unit (DMU) 106, a driving pattern of the authorized driver for a predefined span after the starting of the vehicle;
assessing, by the control unit 104, the monitored driving pattern of the authorized driver; and
limiting, by the control unit 104, at least one vehicle operation based on the assessed driving pattern and the measured alcohol content in the sample of the authorized driver.

10. The method 300 as claimed in claim 9, wherein the predefined span is any one or a combination of a predefined distance and a predefined time duration.

11. The method 300 as claimed in claim 9, wherein the at least one vehicle operation is any one of a vehicle speed, a steering control, a brake control, a plurality of illumination source control, an acceleration control, a deceleration control, and others.

12. The method 300 as claimed in claim 9, wherein a vehicle ignition needs to be on before measurement of the alcohol content in the breath sample of the driver via the alcohol detection unit 102.

13. The method 300 as claimed in claim 9, wherein the driving pattern of the driver includes an eye movement, a head movement, a steering controlling pattern, a voice pattern, a lane changing pattern, a braking pattern, an acceleration and a deceleration pattern, and others.

14. The method 300 as claimed in claim 9, wherein the method 300 further configured to periodically check the driver's breath alcohol content whenever an unsafe driving pattern is detected during a trip, ensuring continuous compliance with the predefined alcohol content limit.

15. The method 300 as claimed in claim 9, wherein the sample of the authorized driver is any one or a combination of a breath sample, a blood sample, a saliva sample, a voice sample and eye-related samples.
